# EUROPÄISCHE PATENTANMELDUNG

(11) **EP 4 852 443 A1**
(43) Veröffentlichungstag der Anmeldung: **09.12.2026**
(21) Anmeldenummer: 26180233.4
(22) Anmeldetag: 21.05.2026
(51) Int. Cl.: H04N 25/47, G06V 20/40, H04N 23/61

(54) **OBJEKTERFASSUNGSSYSTEM**

(30) Priorität: 04.06.2025 DE 202025103094 U; 04.07.2025 DE 202025103816 U
(71) Anmelder: SICK AG, 79183 Waldkirch (DE)
(72) Erfinder: Müller, Romain, 79252 Stegen (DE); Strohmeier, Dirk, 79312 Emmendingen (DE); Reichert, Andreas, 79241 Ihringen (DE)
(74) Vertreter: Manitz Finsterwald Patent- und Rechtsanwaltspartnerschaft mbB

(57) **Zusammenfassung**

Ein Objekterfassungssystem zur Aufnahme eines sich in einer Bewegung befindlichen Objekts umfasst eine Triggereinheit und ein Kamerasystem mit einer ereignisbasierten Kamera und einer Steuereinrichtung, wobei die ereignisbasierte Kamera dazu ausgebildet ist, das Objekt in einem Erfassungsbereich der Kamera zu erfassen und auf zumindest ein Pixelelement der Kamera abzubilden. Die ereignisbasierte Kamera weist eine Verarbeitungseinheit auf, die dazu ausgebildet ist, ereignisbasiert oder ereignisgesteuert bei einem Erfassen einer Belichtungsänderung des Pixelelements die Belichtungsänderung anzeigende Ereignisdaten zu erzeugen und die Ereignisdaten in einem Ereignisdatenstrom über eine Datenverbindung auszugeben. Die Triggereinheit ist dazu ausgebildet, eine Anwesenheit des Objekts an einer Triggerposition zu erfassen und ein Triggersignal an das Kamerasystem zu senden. Das Kamerasystem is dazu ausgebildet, die Ereignisdaten lediglich innerhalb von Zeitintervallen für eine Auswertung bereitzustellen, wobei eine Grenze der Zeitintervalle durch einen Zeitpunkt eines Empfangs des Triggersignals bestimmt ist.

## Beschreibung

Die vorliegende Erfindung betrifft ein Objekterfassungssystem zur Aufnahme eines sich in einer Bewegung befindlichen Objekts.

Für die Objekterfassung oder Bilderfassung wird herkömmlich in aller Regel ein CMOS-Bildsensor eingesetzt. Dieser nimmt mit einer bestimmten Aufnahmefrequenz Bilder auf und integriert dafür innerhalb einer Belichtungszeit alle Ladungen auf, die durch einfallende Photonen erzeugt werden. Bei einem bewegten Objekt stammen aber je nach Belichtungszeit die aufintegrierten Photonen eines Pixels nicht mehr vom selben Ort auf dem Objekt und es entsteht Bewegungsunschärfe. Für die Erkennung von kleinen Strukturen auf einem Objekt stellt sich die besondere Herausforderung, dass die Aufnahmefrequenz schnell genug sein muss, damit die Strukturen überhaupt registriert werden und nicht in der Bewegungsunschärfe verlorengehen, womit dann aber zumindest bei höheren Geschwindigkeiten der Objektbewegung keine ausreichenden Belichtungszeiten mehr möglich sind.

In jüngerer Zeit ist eine neuartige Kameratechnik entstanden, die sogenannte ereignisbasierte oder eventbasierte Kamera. Sie wird in Anlehnung an Netzhaut und visuellen Cortex auch als neuromorphologische Kamera bezeichnet. In einer ereignisbasierten Kamera gibt es weder eine feste Bildwiederholrate noch ein gemeinsames Auslesen von Pixeln. Stattdessen prüft gleichsam jedes Pixel für sich, ob es eine Änderung in der Intensität feststellt. Nur in diesem Fall wird eine Bildinformation erzeugt und ausgegeben beziehungsweise ausgelesen, und zwar nur von diesem Pixel. Jedes Pixel ist somit eine Art unabhängiger Bewegungsdetektor. Eine erfasste Bewegung oder sonstige Änderung der Intensität wird individuell oder asynchron als Ereignis gemeldet. Dadurch reagiert die ereignisbasierte Kamera äußerst schnell auf die Dynamik in der Szene. Aus den Ereignissen erzeugte Bilder sind für das menschliche Auge nicht so intuitiv zu erfassen, weil die statischen Bildanteile fehlen.

Die Druckschrift EP4531412A1 beschreibt einen ereignisbasierten Bildsensor zur Aufnahme eines Objektstroms. Dabei nimmt eine ereignisbasierte Kamera kontinuierlich einen Objektstrom auf und erzeugt kontinuierlich Ereignisdaten, die zur Auswertung ausgegeben werden. Dies hat den Nachteil, dass ununterbrochen eine große Menge von Ereignisdaten verarbeitet und ausgewertet werden muss, wodurch eine hohe Auslastung der die Ereignisdaten auszuwertenden Datenverarbeitungseinrichtungen entsteht.

Es ist daher eine Aufgabe der Erfindung, ein Objekterfassungssystem mit einer ereignisbasierten Kamera anzugeben, welches eine schnelle und effiziente Verarbeitung von durch die ereignisbasierte Kamera gelieferten Ereignisdaten ermöglicht.

Diese Aufgabe wird durch eine Objekterfassungssystem gemäß dem unabhängigen Anspruch gelöst. Weiterbildungen sind jeweils in den abhängigen Ansprüchen, der Beschreibung und den zugehörigen Figuren angegeben.

Es wird ein Objekterfassungssystem zur Aufnahme eines sich in einer Bewegung befindlichen Objekts angegeben, wobei das Objekterfassungssystem eine Triggereinheit und ein Kamerasystem umfasst. Das Kamerasystem umfasst eine ereignisbasierte Kamera und eine Steuereinrichtung, wobei die ereignisbasierte Kamera dazu ausgebildet ist, das Objekt in einem Erfassungsbereich der Kamera zu erfassen und auf zumindest ein Pixelelement der Kamera abzubilden. Die ereignisbasierte Kamera weist eine Verarbeitungseinheit auf, die dazu ausgebildet ist, ereignisbasiert oder ereignisgesteuert bei einem Erfassen einer Belichtungsänderung des Pixelelements die Belichtungsänderung anzeigende Ereignisdaten zu erzeugen und die Ereignisdaten in einem Ereignisdatenstrom über eine Datenverbindung auszugeben. Die Triggereinheit ist dazu ausgebildet, eine Anwesenheit des Objekts an einer Triggerposition zu erfassen und ein Triggersignal an das Kamerasystem zu senden, wobei das Triggersignal die Anwesenheit des Objekts an der Triggerposition anzeigt. Ferner ist das Kamerasystem dazu ausgebildet, die Ereignisdaten lediglich innerhalb von Zeitintervallen für eine Auswertung bereitzustellen, wobei eine Grenze der Zeitintervalle durch einen Zeitpunkt eines Empfangs des Triggersignals bestimmt ist.

Indem das Kamerasystem die Ereignisdaten lediglich in Zeitintervallen zur Auswertung bereitstellt, kann die Anzahl der auszuwertenden Ereignisdaten auf ein notwendiges Minimum reduziert und damit eine besonders schnelle und effiziente Weiterverarbeitung der Ereignisdaten ermöglicht werden. Der Einsatz der Triggereinheit ermöglicht es dabei, die Zeitintervalle auf Zeiträume zu beschränken, in denen Objekte auch tatsächlich innerhalb des Erfassungsbereichs der Kamera anwesend sind. Damit wird sichergestellt, dass die Objekte zum richtigen Zeitpunkt erfasst werden.

Das Kamerasystem kann beispielsweise dadurch dazu ausgebildet sein, die Ereignisdaten lediglich innerhalb der Zeitintervalle für die Auswertung bereitzustellen, dass ein Erzeugen der Ereignisdaten durch die ereignisbasierte Kamera und/oder ein Weiterleiten der Ereignisdaten durch die Steuereinrichtung lediglich innerhalb der Zeitintervalle erfolgt.

Bei ereignisbasierten Kameras begrenzt ein der Kamera zugeführtes Triggersignals üblicherweise nicht den ausgegebenen und damit zur Auswertung zur Verfügung gestellten Datenstrom, sondern das Triggersignal wird lediglich als ein Triggerereignis in den Ereignisdatenstrom eingefügt. Dies erfordert es dann, zunächst ununterbrochen alle Ereignisdaten für die Auswertung bereitzustellen und erst im Rahmen der nachgelagerten Auswertung die gesamten bereitgestellten Ereignisdaten auszulesen und nach Triggerereignissen zu durchsuchen, um den bereits ausgelesenen Ereignisdatenstrom dann anhand der Triggerereignisse selektiv auszuwerten oder zurechtzuschneiden.

Das Kamerasystem, beispielsweise die Steuereinrichtung, kann dazu ausgebildet sein, die Ereignisdaten des Ereignisdatenstroms lediglich innerhalb der Zeitintervalle für die Auswertung bereitzustellen, ohne einen Informationsinhalt der Ereignisdaten auszuwerten, beispielsweise zu verarbeiten. Insbesondere kann ein Weiterleiten der Ereignisdaten vor dem Bereitstellen zur Auswertung und das Bereitstellen zur Auswertung selbst erfolgen, ohne einen Informationsinhalt der Ereignisdaten auszuwerten, beispielsweise zu verarbeiten. Das Kamerasystem, beispielswiese die Steuereinrichtung, kann dazu ausgebildet sein, die Bereitstellung der Ereignisdaten zur Auswertung ohne Kenntnis oder Auswertung des Informationsinhalts der Ereignisdaten auf die Zeitintervalle zu beschränken. Dies ermöglicht ein schnelles Bereitstellen der Ereignisdaten.

Die Beschränkung des Bereitstellens der Ereignisdaten auf die Zeitintervalle ohne Auswertung des Informationsinhalts der Ereignisdaten ist mit der herkömmlichen Triggerfunktion von ereignisbasierten Kameras, bei der lediglich ein den Empfang des Triggersignals anzeigendes Triggerereignis in den Ereignisdatenstrom eingefügt wird, nicht möglich. Das Triggersignal kann dann nämlich bei einem Bereitstellen der Ereignisdaten zur Auswertung nur dadurch berücksichtigt werden, dass der Informationsinhalt der Ereignisdaten ausgelesen und verarbeitet wird, um feststellen zu können, welches der Ereignisdaten das nach Empfang des Triggersignals erstellte Triggerereignis ist.

Die Ereignisdaten können gemäß einem vorbestimmten Datenübertragungsprotokoll, beispielsweise gemäß einem MIPI-Protokoll oder gemäß dem PCle-Protokoll, übertragen werden. Die Ereignisdaten können in dem Ereignisdatenstrom in einem Datenpaket übertragen werden. Das Datenpaket kann die Ereignisdaten als Nutzdaten umfassen. Neben den Nutzdaten kann das Datenpaket auch Steuerdaten umfassen, welche die Übertragung des Datenpakets über die Datenverbindungen steuern. Die Steuerdaten können beispielsweise eine Adressinformation und/oder eine Prüfinformation zur Fehlerkorrektur enthalten.

Falls das Kamerasystem, beispielsweise die Steuereinrichtung, dazu ausgebildet ist, die Ereignisdaten des Ereignisdatenstroms lediglich zu übertragen und weiterzuleiten, ohne den Informationsinhalt der Ereignisdaten auszuwerten, können die Nutzdaten des Datenpakets übertragen werden, ohne dass die Nutzdaten ausgewertet werden. Die Nutzdaten des Datenpakets können also gekapselt übertragen werden. Die Steuerdaten des Datenpakets können dagegen bei dem Übertragen und Weiterleiten des Datenpakets ausgelesen und verarbeitet werden, um die Übertragung zu steuern.

Die Datenverbindungen kann beispielsweise die Verarbeitungseinheit der ereignisbasierten Kamera mit der Steuereinrichtung verbinden. Die Verarbeitungseinheit der ereignisbasierten Kamera kann dazu ausgebildet sein, die Ereignisdaten in dem Ereignisdatenstrom über die Datenverbindungen an die Steuereinrichtung auszugeben. Die Übertragung der Ereignisdaten des Ereignisdatenstroms über die Datenverbindungen kann nach dem vorbestimmten Datenübertragungsprotokoll erfolgen. Die ereignisgesteuerte Kamera und die Steuereinrichtung können jeweils ein Schnittstellenmodul auffassen, wobei ein Schnittstellenmodul der ereignisbasierten Kamera die ereignisgesbasierte Kamera, etwa die Verarbeitungseinheit der ereignisbasierten Kamera, mit der Datenverbindung verbindet und ein Schnittstellenmodul der Steuereinrichtung die Steuereinrichtung mit der Datenverbindung verbindet. Beispielsweise kann die Steuereinrichtung eine Recheneinheit umfassen, welche über das Schnittstellenmodul mit der Datenverbindung verbunden ist und den Ereignisdatenstrom empfängt. Die Schnittstellenmodule können beispielsweise als Protokollchips ausgeführt sein.

Die Verarbeitungseinheit der ereignisbasierten Kamera und die Recheneinheit der Steuereinrichtung können getrennt voneinander, etwa als getrennte integrierte Schaltkreise oder als getrennte Module eines integrierten Schaltkreises, ausgebildet sein.

Generell können die Steuereinrichtung und die ereignisbasierte Kamera als getrennte Geräte ausgeführt sein. Beispielsweise können die Steuereinrichtung und die ereignisbasierte Kamera getrennte Gehäuse umfassen. Die Datenverbindung kann dann einen Gehäuseanschluss des Gehäuses der ereignisbasierten Kamera mit einem Gehäuseanschluss des Gehäuses der Steuereinrichtung verbinden.

Das Objekterfassungssystem kann ein Auswertemodul umfassen, welches dazu ausgebildet ist, die für die Auswertung bereitgestellten Ereignisdaten zu empfangen und auszuwerten. Das Auswertemodul kann getrennt von der Steuereinrichtung ausgeführt sein oder als ein Teil der Steuereinrichtung. Beispielsweise kann das Auswertemodul als ein Softwaremodul oder als ein Programmmodul ausgeführt sein, welches auf der Steuereinrichtung, etwa der Recheneinheit der Steuereinrichtung, ausgeführt wird.

Die durch den Zeitpunkt des Empfangs des Triggersignals bestimmte Grenze der Zeitintervalle kann ein Anfang oder ein Ende eines Zeitintervalls sein. Generell kann die Grenze der Zeitintervalle dem Zeitpunkt des Empfangs des Triggersignals entsprechen. Die Grenze der Zeitintervalle kann durch den Zeitpunkt des Empfangs des Triggersignals auch dadurch bestimmt sein, dass der Empfang des Triggersignals ein Setzen der Grenze der Zeitintervalle auslöst. Beispielsweise kann sich die Grenze der Zeitintervalle und der Zeitpunkt des Empfangs des Triggersignals um eine Verzögerungszeit unterscheiden. Die Verzögerungszeit kann beispielsweise einen festen Wert aufweisen, also deterministisch sein. Die Verzögerungszeit kann beispielsweise einer Verarbeitungszeit entsprechen, die für eine Verarbeitung und/oder Weiterleitung des Triggersignals notwendig ist.

Die Ereignisdaten können als Informationsinhalt eine Positionsinformation und/oder eine Zeitinformation und/oder einer Intensitätsinformation umfassen. Beispielsweise können die Ereignisdaten die Positionsinformation, die Zeitinformation und die Intensitätsinformation umfassen. Die Positionsinformation kann angeben, an welcher Position eines das Pixelelement umfassenden Bildsensors das Ereignis eingetreten ist, sich also die Belichtung geändert hat. Die Zeitinformation kann angeben, wann das Ereignis eingetreten ist. Die Intensitätsinformation kann angeben, welche Art der Belichtungsänderung das Ereignis ausgelöst hat. Die Art der Belichtungsänderung kann beispielsweise nach einer Erhöhung der Belichtung und einer Verringerung der Belichtung unterschieden werden. Beispielsweise kann die Intensitätsinformation bei einer Erhöhung der Belichtung den Wert +1 aufweisen und bei einer Verringerung der Belichtung den Wert -1. Bei einer Erhöhung der Belichtung erhöht sich die Intensität der auf das Pixelelement einfallenden Strahlung und bei einer Verringerung der Belichtung verringert sich die Intensität der auf das Pixelelement einfallenden Strahlung.

Das Pixelelement kann dazu ausgebildet sein, ein Intensitätssignal zu erzeugen, welches eine Intensität von auf das Pixelelement einfallender elektromagnetischer Strahlung, beispielsweise Licht, angibt.

Das Pixelelement kann Bestandteil eines ereignisbasierten Bildsensors sein. Ferner kann der ereignisbasierte Bildsensor eine Auswerteschaltung umfassen, die dazu ausgebildet ist, eine Änderung des Intensitätssignals auszuwerten und auf ein Überschreiten eines Schwellenwerts zu überprüfen. Beispielsweise kann der ereignisbasierte Bildsensor eine Mehrzahl von Pixelelementen und für jedes der Pixelelemente eine eigene Auswerteschaltung umfassen. Schließlich kann die Verarbeitungseinheit ereignisbasierten Kamera die Ereignissignale, die das Überschreiten des Schwellenwerts anzeigen, von der Auswerteschaltung oder den Auswerteschaltungen empfangen und für jedes Ereignissignal zugeordnete Ereignisdaten erzeugen und in den Ereignisdatenstrom einfügen. Die Verarbeitungseinheit kann beispielsweise ein Zeitstempelmodul umfassen, welche für jedes Ereignis die Zeitinformation erzeugt, die Bestandteil der Ereignisdaten ist.

Die Steuereinrichtung und/oder die Verarbeitungseinheit können beispielsweise als eine der folgenden Einrichtungen ausgebildet sein: ein *field programmable gate array* (FPGA), eine *data processing unit* (DPU), eine *central processing unit* (CPU), eine *neuromorphic processor unit* (NPU), eine *image processing unit* (IPU), ein *digital signal processor* (DSP), ein *appliation specific integrated circuit* (ASIC), eine *video processing unit* (VPU) oder ein *neural processor.* Die Steuereinrichtung und/oder die Verarbeitungseinheit können jeweils auch eine Kombination aus mehreren der vorgenannten Einrichtungen umfassen.

Die Ereignisdaten umfassen beispielsweise jeweils eine Koordinateninformation oder Positionsinformation des zugehörigen Pixelelements und/oder eine Zeitinformation eines Eintritts des Ereignisses und/oder eine Intensitätsinformation der Belichtungsänderung. Ein herkömmlicher Datenstrom eines Bildsensors besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen beispielsweise ein Datentupel je Ereignis als Ereignisdaten ausgegeben, das das Ereignis zuordenbar macht. Dabei umfasst das Datentupel beispielsweise als Koordinateninformation einen Ort des zugehörigen Pixelelements, wie etwa dessen X-Y-Position auf einem Bildsensor der Kamera, und/oder die Intensitätsinformation, beispielsweise eine Polarität oder Richtung ±1 der Intensitätsänderung oder der Belichtungsänderung beziehungsweise die zum Ereignis gemessene Intensität, und/oder einen Zeitstempel des Eintritts der Belichtungsänderung als Zeitinformation. Dadurch müssen trotz der hohen effektiven Bildwiederholrate nur sehr wenige Daten erzeugt, ausgelesen und weitergeleitet werden.

Die ereignisbasierte Kamera erzeugt Bildinformationen bevorzugt mit einer Aktualisierungsfrequenz von mindestens einem kHz oder sogar mindestens zehn kHz, mindestens 100 kHz oder mehr. Die Aktualisierungsfrequenz einer herkömmlichen Kamera ist die Bildwiederholfrequenz oder Framerate. Eine solche gemeinsame Bildwiederholfrequenz kennt eine ereignisbasierte Kamera nicht, da die Pixelelemente ihre Bildinformationen einzeln und ereignisbasiert ausgeben oder auffrischen. Dabei gibt es extrem kurze Ansprechzeiten, die mit einer herkömmlichen Kamera nur zu immensen Kosten mit tausend oder mehr Bildern pro Sekunde erreichbar wären, bei einer ereignisbasiert immer noch möglichen noch höheren Aktualisierungsfrequenz wäre das mit herkömmlichen Kameras technisch nicht mehr darstellbar.

Ein jeweiliges Pixelelement stellt bevorzugt fest, wenn sich die von dem Pixelelement erfasste Intensität oder Belichtung ändert, und erzeugt genau dann ein Ereignis. Das drückt nochmals in anderen Worten das besondere Verhalten der Pixelelemente einer ereignisbasierten Kamera beziehungsweise eines ereignisbasierten Bildsensors aus. Das Pixelelement prüft, ob sich die erfasste Intensität oder Belichtung verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst. Ein Ereignis wir dann erst nach einem Erreichen einer Änderungsschwelle erzeugt und ausgegeben.

Das Pixelelement liefert vorzugsweise als Bildinformation oder Intensitätsinformation eine differentielle Information, welche angibt, ob sich die Intensität verringert oder erhöht hat. Eine aus dem Pixelelement gelesene Bildinformation oder Intensitätsinformation ist also beispielsweise eine Polarität, etwa ein Vorzeichen +1 oder -1, je nach Änderungsrichtung der Intensität oder Belichtung. Dabei kann eine Schwelle für Intensitätsänderungen gesetzt sein, bis zu denen das Pixelelement noch kein Ereignis auslöst. Auch die Dauer einer Intensitätsänderung kann eine Rolle spielen, indem beispielsweise der Vergleichswert für die Schwelle mit einer gewissen Abklingzeit nachgezogen wird. Eine zu langsame Veränderung löst dann kein Ereignis aus, auch wenn in Summe, über ein gegenüber der Abklingzeit längeres Zeitfenster, die Intensitätsänderung über der Schwelle lag.

Als Alternative zu einer Ausbildung als differenzielle ereignisbasierte Kamera mit einem differenziellen ereignisbasierten Bildsensor kann die ereignisbasierte Kamera auch als eine integrierende ereignisbasierte Kamera mit einem integrierenden ereignisbasierten Bildsensor ausgebildet sein. Dann liefert das Pixelelement als Bildinformation eine integrierte Intensität in einem durch eine Änderung der Intensität bestimmten Zeitfenster. Hier beschränkt sich die Intensitätsinformation nicht auf eine Richtung der Intensitätsänderung, sondern es wird in einem durch das Ereignis festgelegten Zeitfenster die einfallende Lichtintensität integriert und dadurch ein Grauwert bestimmt, wobei die Intensitätsinformation den Wert der integrierten Lichtintensität angibt. Die Intensitätsinformation entspricht damit derjenigen einer herkömmlichen Kamera, aber der Zeitpunkt der Erfassung und Ausgabe der Intensitätsinformation bleibt ereignisbasiert und an eine Intensitätsänderung gekoppelt.

Bei einer Weiterbildung umfasst das Objekterfassungssystem eine weitere Triggereinheit, wobei die weitere Triggereinheit dazu ausgebildet ist, eine Anwesenheit des Objekts an einer weiteren Triggerposition zu erfassen und ein weiteres Triggersignal an das Kamerasystem zu senden, und wobei eine weitere Grenze der Zeitintervalle durch einen Zeitpunkt eines Empfangs des weiteren Triggersignals bestimmt ist. Beispielsweise kann der Zeitpunkt des Empfangs des Triggersignals den Anfang eines Zeitintervalls bestimmen und der Zeitpunkt des Empfangs des weiteren Triggersignals kann das Ende des Zeitintervalls bestimmen.

Generell kann die durch den Zeitpunkt des Empfangs des weiteren Triggersignals bestimmte weitere Grenze der Zeitintervalle der Anfang oder das Ende eines Zeitintervalls sein. Die weitere Grenze der Zeitintervalle kann dem Zeitpunkt des Empfangs des weiteren Triggersignals entsprechen. Die weitere Grenze der Zeitintervalle kann auch dadurch durch den Zeitpunkt des Empfangs des weiteren Triggersignals bestimmt sein, dass der Empfang des weiteren Triggersignals ein Setzen der weiteren Grenze der Zeitintervalle auslöst. Beispielsweise kann sich die weitere Grenze der Zeitintervalle und der Zeitpunkt des Empfangs des weiteren Triggersignals um eine Verzögerungszeit unterscheiden. Die Verzögerungszeit kann beispielsweise einen festen Wert aufweisen, also deterministisch sein. Die Verzögerungszeit kann beispielsweise einer Verarbeitungszeit entsprechen, die für eine Verarbeitung und/oder Weiterleitung des weiteren Triggersignals notwendig ist.

Die weitere Grenze der Zeitintervalle kann alternativ auch durch den Zeitpunkt des Empfangs des Triggersignals bestimmt sein. Beispielsweise kann sich die weitere Grenze der Zeitintervalle von der Grenze um eine festgelegte Länge eines Zeitintervalls unterscheiden. So kann die Grenze des Zeitintervalls, die durch den Empfang des Triggersignals bestimmt wird, der Anfang des Zeitintervalls sein und die weitere Grenze des Zeitintervalls kann das Ende des Zeitintervalls sein, wobei die Differenz zwischen dem Ende des Zeitintervalls und dem Anfang des Zeitintervalls der festgelegten Länge des Zeitintervalls entspricht.

Die Triggereinheit und die weitere Triggereinheit können als Ereignissensoren ausgebildet sein, etwa als Lichtschranken, Lichtgitter, Taster, Näherungssensoren oder ähnliches.

Bei einer Weiterbildung ist die Steuereinrichtung dazu ausgebildet, das Triggersignal zu empfangen und die ausgegebenen Ereignisdaten auf die Zeitintervalle zu beschränken. Beispielsweise kann die Steuereinrichtung direkt mit der Triggereinheit verbunden sein. Bei einer derartigen Ausgestaltung kann die ereignisbasierte Kamera, etwa die Verarbeitungseinheit der ereignisbasierten Kamera, zwar einen Triggereingang aufweisen, die Triggereinheit kann jedoch nicht mit dem Triggereingang der ereignisbasierten Kamera verbunden sein, sondern mit einem Eingang der Steuereinrichtung, etwa einem Triggereingang der Steuereinrichtung. Der Eingang der Steuereinrichtung bzw. der Triggereingang der Steuereinrichtung kann ein Eingang bzw. ein Triggereingang der Recheneinheit der Steuereinrichtung sein.

Bei einer derartigen Ausgestaltung ist also die Steuereinrichtung über die Datenverbindungen mit der ereignisbasierten Kamera verbunden, um den Ereignisdatenstrom zu empfangen, und die Steuereinrichtung ist über den Eingang bzw. Triggereingang mit der Triggereinheit verbunden, um das Triggersignal zu empfangen.

Bei einer Weiterbildung ist die ereignisbasierte Kamera dazu ausgebildet, den Ereignisdatenstrom kontinuierlich an die Steuereinrichtung, etwa über die Datenverbindungen, zu übertragen und die Steuereinrichtung ist dazu ausgebildet, die Ereignisdaten des Ereignisdatenstroms außerhalb der Zeitintervalle zu verwerfen. Dies ermöglicht eine besonders einfache und schnelle Filterung des Ereignisdatenstroms, um das Bereitstellen der Ereignisdaten auf die Zeitintervalle zu beschränken. Außerdem kann eine Verarbeitung des Triggersignals und ein Steuern des Verwerfens der Ereignisdaten in der Steuereinrichtung mit besonders geringer Verzögerung erfolgen, sodass die Grenzen der Zeitintervalle durch die Triggersignale deterministisch und ohne zeitliche Fluktuationen bestimmt sind.

Die Steuereinrichtung, beispielsweise die Recheneinheit der Steuereinrichtung, kann die Ereignisdaten außerhalb der Auswerteintervalle basierend auf dem Triggersignal verwerfen, beispielsweise bei Empfang des Triggersignals mit dem Verwerfen beginnen oder das Verwerfen bei Empfang des Triggersignals beenden.

Allgemein kann die Steuereinrichtung beispielsweise dazu ausgebildet sein, das Triggersignal zu empfangen, und dazu ausgebildet sein, dass ein Zugriff der Steuereinrichtung, beispielsweise der Recheneinheit der Steuereinrichtung, auf den Ereignisdatenstrom durch das Triggersignal begrenzt, beispielsweise begonnen oder beendet wird. Generell kann der Zugriff der Steuereinrichtung auf den Ereignisdatenstrom durch die Triggersignale der Triggereinheit gesteuert werden. Zugriff auf den Ereignisdatenstrom kann beispielsweise in einem Weiterleiten der Ereignisdaten des Ereignisdatenstroms bestehen.

Die Steuereinrichtung kann beispielsweise die Ereignisdaten an einer Schnittstelle der Steuereinrichtung verwerfen. Beispielsweise können die Ereignisdaten außerhalb der Zeitintervalle an der Schnittstelle nicht übernommen oder nicht aus der Schnittstelle, etwa aus einem Pufferspeicher der Schnittstelle, ausgelesen werden. Die Schnittstelle kann beispielsweise durch das Schnittstellenmodul zur Anbindung der Steuereinrichtung an die Datenverbindung gebildet werden. Die Schnittstelle kann auch eine interne Schnittstelle der Steuereinrichtung sein, beispielsweise eine interne Schnittstelle der Recheneinheit. Beispielsweise kann die interne Schnittstelle eine Schnittstelle zwischen einzelnen Hardwaremodulen oder einzelnen Softwaremodulen der Steuereinrichtung oder der Recheneinheit sein.

Bei einer Weiterbildung ist die Steuereinrichtung dazu ausgebildet, die Ereignisdaten außerhalb der Zeitintervalle direkt zu verwerfen und die Ereignisdaten innerhalb der Zeitintervalle für die Auswertung bereitzustellen.

Die Ereignisdaten können beispielsweise außerhalb der Zeitintervalle bei einer Übertragung zwischen zwei Verarbeitungsmodulen der Steuereinrichtung direkt verworfen werden. Dabei kann ein empfangendes Verarbeitungsmodul die Ereignisdaten außerhalb der Zeitintervalle nicht annehmen oder nicht weiterverarbeiten. Beispielsweise kann das Triggersignal das empfangende Verarbeitungsmodul veranlassen, die Annahme oder Weiterverarbeitung der Ereignisdaten zu beginnen oder zu beenden. Insbesondere kann das Triggersignal der Triggereinheit das empfangende Verarbeitungsmodul veranlassen, die Annahme oder Weiterverarbeitung der Ereignisdaten zu beginnen und das weitere Triggersignal der weiteren Triggereinheit kann das empfangende Verarbeitungsmodul veranlassen, die Annahme oder Weiterverarbeitung der Ereignisdaten zu beenden. Bei einem direkten Verwerfen der Ereignisdaten befinden sich die verworfenen Ereignisdaten beim Verwerfen in Übertragung und beispielsweise nicht in einer Speichereinheit. Dadurch laufen die verworfenen Ereignisdaten außerhalb der Zeitintervalle "ins Leere".

Bei einer Weiterbildung weist die Steuereinrichtung einen Pufferspeicher auf und die Steuereinrichtung ist dazu ausgebildet, alle Ereignisdaten des Ereignisdatenstroms in den Pufferspeicher zu schreiben. Ferner ist die Steuereinrichtung dazu ausgebildet, die Ereignisdaten selektiv innerhalb der Zeitintervalle aus dem Pufferspeicher auszulesen und zur Auswertung bereitzustellen und die Ereignisdaten außerhalb der Zeitintervalle zu verwerfen, indem die Ereignisdaten außerhalb der Zeitintervalle im Pufferspeicher belassen und überschrieben werden. Bei einer derartigen Ausgestaltung kann der Zugriff auf den Pufferspeicher durch das Triggersignal gesteuert werden. Außerdem stehen die außerhalb der Zeitintervalle erzeugten Ereignisdaten zumindest noch zeitweise für eine Auswertung zur Verfügung.

Der Pufferspeicher kann beispielsweise als ein Ringspeicher ausgebildet sein.

Beispielsweise kann der Pufferspeicher ein Pufferspeicher des Schnittstellenmoduls der Steuereinrichtung sein. Der Ereignisdatenstrom kann dann kontinuierlich in den Pufferspeicher des Schnittstellenmodul geschrieben werden und ein Zugriff der Recheneinheit der Steuereinrichtung auf den Pufferspeicher kann durch das Triggersignal begrenzt, beispielsweise gestartet oder beendet werden. Insbesondere kann der Zugriff auf den Pufferspeicher durch das Triggersignal der Triggereinheit gestartet und durch das weitere Triggersignal der weiteren Triggereinheit beendet werden.

Bei einer Weiterbildung ist die Kamera zu einem Empfangen des Triggersignals von der Triggereinheit ausgebildet und dazu ausgebildet, das Empfangen des Triggersignals anzeigende Triggerereignisdaten in den Ereignisdatenstrom einzufügen. Außerdem ist die Steuereinrichtung dazu ausgebildet, basierend auf den Triggerereignisdaten die Ereignisdaten innerhalb der Zeitintervalle aus dem Pufferspeicher auszulesen und zur Auswertung bereitzustellen. Dies ermöglicht es, die Bereitstellung der Ereignisdaten auch unter Verwendung des herkömmlichen Triggereingangs einer ereignisbasierten Kamera auf die Zeitintervalle zu beschränken.

Bei dieser Ausführungsform bestimmt sich die Verzögerungszeit durch diejenige Zeit, die zwischen dem Empfang des Triggersignals durch die ereignisbasierte Kamera und dem Auslesen der Triggerereignisdaten durch die Steuereinrichtung verstreicht.

Eine Größe des Pufferspeichers kann derart bemessen sein, dass der Pufferspeicher alle innerhalb des Zeitintervalls erzeugten Ereignisdaten aufnehmen kann.

Die Triggereinheit kann direkt mit dem Triggereingang der ereignisbasierten Kamera verbunden sein. Alternativ kann die Triggereinheit auch mit der Steuereinrichtung verbunden sein und die Steuereinrichtung kann das Triggersignal an den Triggereingang der ereignisbasierten Kamera weiterleiten.

Bei einer Weiterbildung ist das Kamerasystem dazu ausgebildet, eine Übertragung des Ereignisdatenstroms von der ereignisbasierten Kamera an die Steuereinrichtung basierend auf dem Triggersignal auf die Zeitintervalle zu begrenzen. Dadurch kann der Ereignisdatenstrom direkt an der ereignisbasierten Kamera beschränkt werden und eine Auslastung der Datenverbindung wird reduziert.

Bei einer Weiterbildung ist die ereignisbasierte Kamera dazu ausgebildet, das Triggersignal zu empfangen und die Übertragung des Ereignisdatenstroms basierend auf dem Triggersignal auf die Zeitintervalle zu begrenzen, beispielsweise die Übertragung des Ereignisdatenstroms über die Datenverbindung basierend auf dem Triggersignal zu beginnen oder zu beenden. Dabei kann die Kamera beispielsweise dazu ausgebildet sein, bei Empfang des Triggersignals in Betrieb oder außer Betrieb zu gehen. Während die Kamera in Betrieb geht, kann sich die Kamera beispielsweise initialisieren.

Auch in diesem Fall kann die Triggereinheit direkt mit der ereignisbasierten Kamera, etwa mit einem Triggereingang der ereignisbasierten Kamera, verbunden sein. Alternativ kann die Triggereinheit auch mit der Steuereinrichtung verbunden sein und die Steuereinrichtung kann das Triggersignal an die ereignisbasierte Kamera, etwa den Triggereingang der ereignisbasierten Kamera, weiterleiten.

Bei einer Weiterbildung ist die Steuereinrichtung dazu ausgebildet, das Triggersignal zu empfangen und basierend auf dem Triggersignal die ereignisbasierte Kamera in Betrieb oder außer Betrieb zu setzen. Beispielsweise kann die Steuereinrichtung dazu ausgebildet sein, die ereignisbasierte Kamera zu initialisieren, sodass die ereignisbasierte Kamera mit der Ausgabe des Ereignisdatenstroms über die Datenverbindungen beginnt.

Bei einer Weiterbildung ist das Kamerasystem dazu ausgebildet, die Ereignisdaten innerhalb der Zeitintervalle für die Auswertung bereitzustellen, indem die Ereignisdaten in einem Auswertespeicher zur weiteren Verarbeitung durch ein Auswertemodul gespeichert werden oder direkt an das Auswertemodul weitergeleitet werden. Das Auswertemodul kann beispielsweise dazu ausgebildet sein, die Ereignisdaten parallel zu verarbeiten.

Bei einer Weiterbildung ist die Triggerposition innerhalb des Erfassungsbereichs der ereignisbasierten Kamera angeordnet ist, beispielsweise auf einer Grenze des Erfassungsbereichs. Dies stellt sicher, dass nur diejenigen Ereignisdaten für die Auswertung bereitgestellt werden, die während einer Anwesenheit des Objekts im Erfassungsbereich aufgenommen wurden. Die weitere Triggerposition kann beispielsweise ebenfalls innerhalb des Erfassungsbereichs, beispielsweise auf einer weiteren Grenze des Erfassungsbereichs, angeordnet sein. Es können auch die Triggerposition und die weitere Triggerposition beide innerhalb des Erfassungsbereich und beabstandet von Grenzen des Erfassungsbereichs angeordnet sein, sodass die Triggerposition und die weitere Triggerposition einen interessierenden Bereich innerhalb des Erfassungsbereichs begrenzen. Alternativ können die Triggerposition und die weitere Triggerposition auch jeweils auf den Grenzen des Erfassungsbereichs angeordnet sein.

Bei einer Weiterbildung ist die ereignisbasierte Kamera dazu ausgebildet, das Objekt in der Bewegung in dem Erfassungsbereich der ereignisbasierten Kamera zu erfassen und Bereiche des Objekts sukzessive auf verschiedene Pixelelemente der ereignisbasierten Kamera abzubilden. Dies ermöglicht ein Erfassen des Objekts über einen längeren Zeitraum, was die von dem Objekt empfangene Lichtintensität erhöht und so zu einem verbesserten Signal-Rausch-Verhältnis führen kann.

Bei einer Weiterbildung umfasst das Objekterfassungssystem das Auswertemodul zur Auswertung der Ereignisdaten, wobei das Auswertemodul dazu ausgebildet ist, bei der Auswertung der Ereignisdaten eine Objektinformation zu erstellen, wobei in der Objektinformation mehrere Ereignisdaten aus den Zeitintervallen verrechnet sind. Durch das Verrechnen mehrerer Ereignisdaten wird der Informationsgehalt der Objektinformation erhöht. Beispielsweise kann ein Signal-Rausch-Verhältnis der Objektinformation erhöht werden.

Das Auswertemodul kann dazu ausgebildet sein, in der einzelnen Objektinformation nur Ereignisdaten aus lediglich einem einzelnen Zeitintervall zu verrechnen. Beispielsweise kann das Auswertemodul dazu ausgebildet sein, mehrere Objektinformationen zu erstellen und in den einzelnen Objektinformationen jeweils nur Ereignisdaten aus einem einzelnen Zeitintervall zu verrechnen.

Bei einer Weiterbildung ist das Auswertemodul dazu ausgebildet, die mehreren Ereignisdaten bei dem Erstellen der Objektinformation entsprechend einer seit einem Bezugszeitpunkt verstrichenen Zeit und einer während der verstrichenen Zeit erfolgten Bewegung des Objekts korrigiert zu verrechnen. Dadurch können Bewegungsartefakte aus den Ereignisdaten herausgerechnet werden. Beispielsweise können die Ereignisdaten, die aufgrund der Bewegung des Objekts an Pixelelementen mit unterschiedlichen Positionen erzeugt wurden, unter Berücksichtigung der Bewegung des Objekts auf eine einzelne Position, beispielsweise die Position des Pixelelements, das das Objekt zuerst erfasst hat, zurückgerechnet werden.

Die während der verstrichenen Zeit erfolgte Bewegung wird vorzugsweise durch eine Parametrierung vorgegeben, mittels eines zusätzlichen Sensors gemessen oder aus den Ereignissen bestimmt. Mittels Parametrierung lässt sich eine fest vorgegebene Bewegung kompensieren, beispielsweise durch Angabe einer Geschwindigkeit einer gleichförmigen Bewegung, wobei auch komplexere Bewegungen parametrierbar sind. Es ist dabei denkbar, die Parameter der Bewegung aus Einstellungen einer Fördereinrichtung zu übernehmen, die das aufzunehmende Objekt bewegt oder beispielsweise ein als Folie ausgebildetes Objekt ab- oder aufrollt. Die Messung mit einem zusätzlichen Sensor, beispielsweise einem Inkrementalgeber an einer Fördereinrichtung, bedeutet etwas mehr Aufwand, ist aber dafür flexibler und anpassungsfähiger. Eine dritte Möglichkeit besteht darin, die Bewegung aus den Messdaten des Bildsensors, nämlich den Ereignissen zu bestimmen. In diesem Fall gibt es keine Vorgaben oder zusätzlichen Informationen über die Bewegung, die vielmehr eigenständig geschätzt wird. Dadurch müssen keine Schnittstellen geschaffen werden, und es ist wie bei der Messung mit einem zusätzlichen Sensor sichergestellt, dass die tatsächliche und nicht eine nur gewünschte oder spezifizierte Bewegung berücksichtigt wird.

Vorzugsweise bewegt sich das Objekt nur in eine Richtung. Das ist ein häufiger Anwendungsfall und vereinfacht die Korrektur der Ereignisdaten erheblich. Die Bewegung erfolgt insbesondere gleichförmig, also mit konstanter Geschwindigkeit. Das Anwendungsbeispiel einer Fördereinrichtung oder des Auf- oder Abrollens von Folien wurde bereits genannt, hier ist die Bewegung bis auf gelegentliche Umschaltvorgänge in aller Regel gleichförmig. Die Geschwindigkeit beträgt einige Meter pro Sekunde, liegt beispielsweise im Intervall von 0,5-1,5 m/s entsprechend einer typischen Fördergeschwindigkeit beziehungsweise Laufgeschwindigkeit einer Folie.

Allgemein kann die Geschwindigkeit mindestens 0,1 m/s, beispielsweise mindestens 0,25 m/s, mindestens 0,5 m/s, mindestens 1 m/s, mindestens 2,5 m/s, mindestens 5 m/s, mindestens 10 m/s, mindestens 15 m/s oder mindestens 20 m/s betragen.

Die Geschwindigkeit kann höchstens 0,25 m/s, beispielsweise höchstens 0,5 m/s, höchstens 1 m/s, höchstens 2,5 m/s, höchstens 5 m/s, höchstens 10 m/s, höchstens 15 m/s, höchstens 20 m/s oder höchstens 30 m/s betragen.

Beispielsweise kann die Geschwindigkeit im Intervall von 0,1 - 30 m/s, etwa im Intervall von 0,5 - 20 m/s liegen.

Der Bildsensor ist vorzugsweise mit den Zeilen oder Spalten der Pixelelemente in Richtung der Bewegung ausgerichtet. Die Kamera wird also so zu einem Objektstrom angebracht, dass die Bewegung entlang der Zeilen oder Spalten der Pixelelemente des Bildsensors verläuft. Das erleichtert die weitere Verarbeitung und vermeidet Diskretisierungsartefakte.

Die Ereignisdaten werden bevorzugt nach der Vorschrift *Xₙ = X - v* * *dT* korrigiert, mit *X* Position des das Ereignis auslösenden Pixelelements, *Xₙ* neue Position, *v* Geschwindigkeit der Bewegung und *dT* seit dem Bezugszeitpunkt verstrichene Zeit. Dabei ist die Richtung der Bewegung ohne Beschränkung der Allgemeinheit als X-Richtung bezeichnet, das ließe sich immer durch eine einfache Drehung erreichen, wenn die Richtung der Bewegung nicht mit den Zeilen des Bildsensors übereinstimmt. In Y-Richtung ist damit keine Korrektur erforderlich, weil sich der Objektstrom in diese Richtung nicht bewegt. Die Einheiten sind wählbar, beispielsweise entsprechen die Positionen der Pixelposition auf dem Bildsensor, die verstrichene Zeit ist in Sekunden und die Geschwindigkeit ist in Pixel/Sekunde angegeben.

Bei einer nicht gleichförmigen Bewegung können die Ereignisdaten allgemein nach der Vorschrift *Xₙ = X -* ∫ *v*(*t*) *dt* korrigiert werden, wobei *v*(*t*) den zeitlichen Verlauf der Geschwindigkeit des Objekts, beispielsweise eine parametrierte Geschwindigkeit, bezeichnet und *dt* das Zeitinkrement. Das Integral der Vorschrift kann auch numerisch diskretisiert berücksichtigt werden.

Für die Korrektur entsprechend der seit einem Bezugszeitpunkt verstrichenen Zeit und der während der verstrichenen Zeit erfolgten Bewegung werden bevorzugt die Ereignisdaten selbst ausgewertet, ohne daraus zunächst ein Bild zusammenzusetzen, und erst abschließend nach der Korrektur werden die korrigierten Ereignisdaten in einem Bild gesammelt, das dann ausgewertet wird, beispielsweise hinsichtlich von Kontraststellen auf einer homogenen Fläche des Objekts. Ereignisse treten bei Aufnahme eines Objekts mit einer homogenen Fläche nur selten auf. Daher ist es sinnvoll, die Auswertung möglichst lange auf Ebene der Ereignisdaten zu halten (sparse data, sparse evaluation). Es ist sogar vorstellbar, auch die Kontraststellen auf dieser Ebene der Ereignisdaten zu finden, beispielsweise als Anhäufung von Ereignissen, und somit nie ein Bild zusammenzusetzen. Allerdings ist dadurch der Weg versperrt, auf bewährte Bildauswertungen zurückzugreifen.

Das korrigierte Verrechnen der Ereignisdaten kann insbesondere erfolgen, wie es in der Druckschrift EP4531412A1 offenbart ist. Der Offenbarungsgehalt der Druckschrift EP4531412A1 wird durch Rückbezug vollständig, insbesondere soweit er das Verrechnen der Eingangsdaten und die Ausgestaltung der Fördereinrichtung und der geförderten Objekte betrifft, zum Gegenstand der vorliegenden Offenbarung gemacht.

Bei einer Weiterbildung ist das Kamerasystem dazu eingerichtet, stationär an einer Fördereinrichtung, mittels derer das Objekt durch den Erfassungsbereich der Kamera bewegbar ist, angeordnet zu werden. Das Kamerasystem kann beispielsweise stationär an der Fördereinrichtung angeordnet sein. Die Fördereinrichtung kann beispielsweise ein Förderband sein, auf welchem das Objekt angeordnet ist. Bei einem als Folie ausgebildeten Objekt kann die Fördereinrichtung auch eine Vorrichtung zum Ab- und Aufwickeln der Folie sein.

Bei einer Weiterbildung ist die Bewegung eine lineare Bewegung. Eine lineare Bewegung ermöglicht es, Bewegungsartefakte in den Ereignisdaten besonders einfach zu korrigieren.

Bei einer Weiterbildung weist das Objekt eine homogene Fläche und auf der homogenen Fläche angeordnete Kontraststellen, beispielsweise Störstellen oder Markierungen, auf. Für derartige Anwendungen sind ereignisbasierte Kamerasysteme besonders gut geeignet.

Die Erwartung an das Objekt, das beispielsweise im Rahmen einer Qualitätsprüfung oder in einem Fertigungsprozess inspiziert wird, ist dabei beispielsweise eine durchgehend homogene Fläche. Abweichungen von der homogenen Fläche, die verschiedenste Ursachen wie Mikrorisse oder Partikel oder auch Markierungen haben können, werden als Kontraststellen erkannt. Die Auswertung kann angeben, ob solche Kontraststellen vorhanden sind, und, beispielsweise, an welchen Positionen.

Bei einer Weiterbildung zeigt das Triggersignal eine Anwesenheit einer Kante der homogenen Fläche an der Triggerposition an. Dadurch kann die Auswertung der Ereignisdaten besonders einfach auf die Anwesenheit des Objekts beziehungsweise der homogenen Fläche im Erfassungsbereich der ereignisbasierten Kamera begrenzt werden.

Bei einer Weiterbildung ist das Objekt eine Batteriefolie und die Kontraststellen sind in die Batteriefolie eingelagerte Störstellen.

Das Objekt kann also eine Batteriefolie zur Herstellung einer Batterie. Der Begriff Batterie ist hier weit genug gefasst, um wiederaufladbare Batterien oder Akkus mit zu umfassen. Solche Folien erfüllen die Voraussetzung einer homogenen Fläche im ungestörten Fall. Zugleich sind unerkannte Störstellen für die gefertigte Batterie ein großes Problem, eine unzureichende Funktion der Folien führt zu Wärme- und Kapazitätsverlusten und im Extremfall sogar Bränden und Explosionen.

Das Objekt ist bevorzugt eine Anodenfolie, eine Kathodenfolie oder eine Separatorfolie. Somit können sämtliche für die Fertigung von Batterien relevanten Folien auf Störstellen geprüft werden. Vorteilhafterweise werden mehrere oder alle Typen von Folien bereits während der Herstellung auf Störstellen geprüft, insbesondere direkt im Fertigungsprozess, so dass auf die Störstellen zurückgehende Defekte von Vorneherein vermieden sind.

Vorzugsweise werden als Störstellen Partikel bereits in der Größenordnung der Dicke der Folie erkannt, insbesondere Partikel ab einem Durchmesser von höchstens der halben Dicke der Folie. Größere Störstellen werden damit erst recht erkannt, die Herausforderung besteht in der Erkennung kleinster Strukturen. Die Größenordnung bedeutet wie üblich einen zulässigen Faktor n oder 1/n mit n<10 zu der Dicke der Folie, also beispielsweise doppelte oder dreifache Dicke. Die halbe Dicke hat insofern eine besondere Bedeutung, als noch kleinere Partikel eine Folie nicht mehr durchdringen können und daher entsprechende Störstellen nicht unbedingt erfasst werden müssen. In absoluten Zahlen bedeuten diese Angaben für typische Folien, insbesondere Batteriefolien, eine Größenordnung von einigen Mikrometern, beispielsweise 5 µm, 10 µm, 15 µm oder 20 µm.

Bei einer Weiterbildung sind die Kontraststellen eine maschinenlesbare Markierung, etwa ein Barcode oder in QR-Code. Auch zur Erkennung von Markierungen auf bewegten Objekten, beispielsweise in Förderanlagen, eignen sich ereignisbasierte Kameras aufgrund ihrer schnellen Signalverarbeitung.

Es wird ferner in Verfahren zur Aufnahme eines sich in einer Bewegung befindlichen Objekts mit einem Objekterfassungssystem angegeben, wobei das Objekterfassungssystem eine Triggereinheit und ein Kamerasystem umfasst. Das Kamerasystem umfasst eine ereignisbasierte Kamera und eine Steuereinrichtung. Das Verfahren umfasst die folgenden Schritte:
- Erfassen des Objekts in einem Erfassungsbereich der Kamera und Abbilden des Objekts auf zumindest ein Pixelelement der Kamera;
- Erfassen einer Belichtungsänderung des Pixelelements;
- ereignisbasiertes oder ereignisgesteuertes Erzeugen von die Belichtungsänderung anzeigenden Ereignisdaten;
- Ausgeben der Ereignisdaten in einem Ereignisdatenstrom über eine Datenverbindung;
- Erfassen einer Anwesenheit des Objekts an einer Triggerposition mittels der Triggereinheit;
- Senden eines Triggersignals an das Kamerasystem, wobei das Triggersignal die Anwesenheit des Objekts an der Triggerposition anzeigt;
- Bereitstellen der Ereignisdaten für eine Auswertung lediglich innerhalb von Zeitintervallen, wobei eine Grenze der Zeitintervalle durch einen Zeitpunkt eines Empfangs des Triggersignals bestimmt ist.

Die Erfindung wird nachfolgend anhand von Figuren erläutert. Dabei zeigen in jeweils schematischer Darstellung:
- Fig. 1: ein Objekterfassungssystem mit einem Kamerasystem;
- Fig. 2: eine Detailansicht des Kamerasystems mit einer ereignisbasierten Kamera und einer Steuereinrichtung;
- Fig. 3: eine zweite Ausführungsform des Objekterfassungssystems;
- Fig. 4: eine dritte Ausführungsform des Objekterfassungssystems.

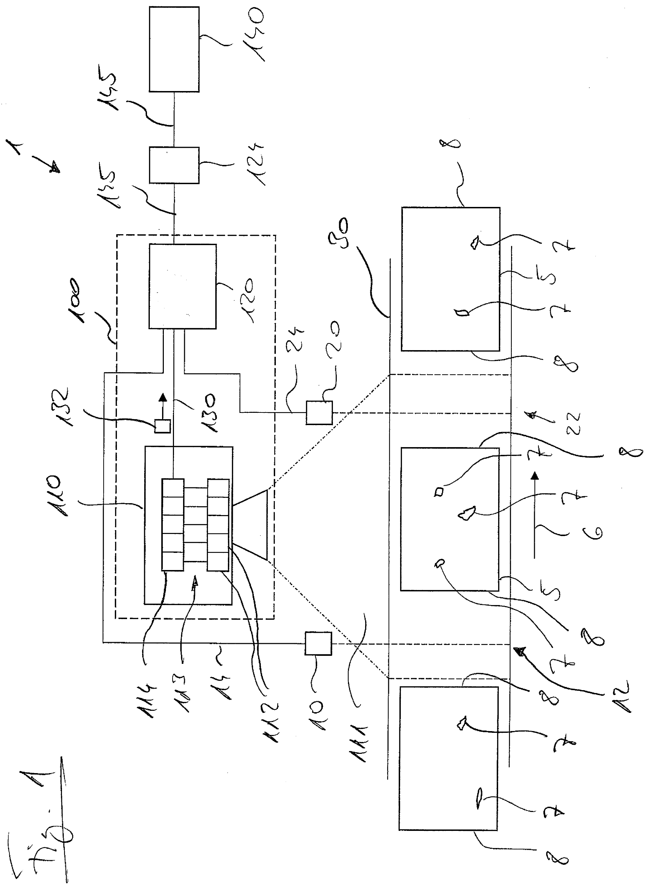

Fig. 1 zeigt ein Objekterfassungssystem 1 mit einem Kamerasystem 100, welches eine ereignisbasierte Kamera 110 und eine Steuereinrichtung 120 umfasst. Die ereignisbasierte Kamera 110 erfasst mit einem Bildsensor 113 über ein nur rein schematisch gezeigtes Objektiv jeder an sich bekannten Bauart Bildinformationen eines bewegten Objekts 5 in einem Erfassungsbereich 111.

Das Objekt 5 wird auf einer Fördereinrichtung 30 mit einer beispielhaft linearen Bewegung 6 gefördert, wobei die Fördereinrichtung 30 mehrere der Objekte 5 nacheinander durch den Erfassungsbereich 111 bewegt. Die Objekte 5 sind beispielhaft einzelne Folien, die auf der Fördereinrichtung 30 aufliegen. Die Objekte 5 weisen eine homogene Fläche mit einzelnen Kontraststellen 7 auf, welche unregelmäßig auf den einzelnen Objekten 5 angeordnet sind. Bei den Kontraststellen 7 handelt es sich beispielhaft um in das Folienmaterial eingelagerte Störstellen. In Richtung der Bewegung 6 werden die Objekte 5 durch Kanten 8, 9 begrenzt, wobei jeweils eine der Kanten 8, 9 eine Vorderkante 8 und eine der Kanten 8, 9 eine Hinterkante 9 der Objekte 5 bildet. Die Vorderkante 8 ist in Richtung der Bewegung 6 vor der Hinterkante 9 des Objekts 5 angeordnet.

Das Objekterfassungssystem 1 weist eine Triggereinheit 10 und eine weitere Triggereinheit 20 auf, welche an der Fördereinrichtung 30 angeordnet sind. Die Triggereinheit 10 erfasst eine Anwesenheit der Objekte 5 an einer Triggerposition 12 und erzeugt bei einer Anwesenheit eines Objekts 5 an der Triggerposition 12 ein Triggersignal 14. Die weitere Triggereinheit 20 erfasst eine Anwesenheit der Objekte 5 an einer weiteren Triggerposition 22 und erzeugt bei einer Anwesenheit eines Objekts 5 an der weiteren Triggerposition 22 ein weiteres Triggersignal 24.

Beispielhaft erzeugt die Triggereinheit 10 das Triggersignal 14 bei einer Ankunft der Vorderkanten 8 der Objekte 5 an der Triggerposition 12 und die weitere Triggereinheit 20 erzeugt das weitere Triggersignal 24 bei einer Ankunft der Hinterkanten 9 der Objekte 5 an der weiteren Triggerposition 22.

Die Triggereinheiten 10, 20 sind über Datenleitungen mit der Steuereinrichtung 120 verbunden und leiten die Triggersignale 14, 24 an die Steuereinrichtung 120 weiter.

Der Bildsensor 110 umfasst beispielhaft eine Matrixanordnung von Pixelelementen 112 und ist ein ereignisbasierter Bildsensor. In anderen Ausführungsformen kann der Bildsensor 110 auch eine Zeilenanordnung der Pixelelemente 112 umfassen. Im Gegensatz zu einem herkömmlichen Bildsensor werden bei dem ereignisbasierten Bildsensor 110 in den jeweiligen Pixelelementen 112 nicht Ladungen über ein gewisses Integrationsfenster gesammelt und dann die Pixelelemente 112 synchron als Bild ausgelesen. Vielmehr werden von den einzelnen Pixelelementen 112 asynchron Ereignisse ausgelöst und weitergegeben, wenn sich in deren Sichtfeld eine Intensitätsänderung oder eine Belichtungsänderung ergibt. Hierzu ist jedes Pixelelement 112 ist mit einer Auswerteschaltung 114 verbunden, welche Intensitätsänderungen, die eine Auslöseschwelle überschreiten, detektieren und entsprechende Ereignissignale an eine in Figur 1 nicht dargestellte Verarbeitungseinheit der Kamera 110 übermitteln.

Die Verarbeitungseinheit erzeugt für jedes Ereignissignal Ereignisdaten 132 und leitet die Ereignisdaten 132 in einem Ereignisdatenstrom über eine Datenverbindung 130 an die Steuereinrichtung 120 weiter. Die Steuereinrichtung 120 ist über eine Auswertedatenverbindung 145 mit einem Auswertemodul 140 verbunden, wobei das Auswertemodul 140 dazu ausgebildet ist, die Ereignisdaten 132 auszuwerten, etwa hinsichtlich einem Vorhandensein und hinsichtlich Positionen der Kontraststellen 7 auf den Objekten 5. Wie in Fig. 1 gezeigt ist, kann die Steuereinrichtung 120 mit dem Auswertemodul 140 über einen Auswertespeicher 124 verbunden sein, welcher die Ereignisdaten 132 vor der Auswertung zwischenspeichert. Bei alternativen Ausführungsformen kann das Auswertemodul 140 auch direkt mit der Steuereinrichtung 120 ohne den Auswertespeicher 124 verbunden sein und das Auswertemodul 140 kann die Ereignisdaten 132 direkt auswerten.

Die Steuereinrichtung 120 ist dazu ausgebildet, lediglich innerhalb von Zeitintervallen die Ereignisdaten 132 für eine Auswertung durch das Auswertemodul 140 bereitzustellen und über die Auswertedatenverbindung 145 an das Auswertemodul 140 und den Auswertespeicher 124 zu übermitteln. Die Grenzen der Zeitintervalle werden dabei durch den Empfang der Triggersignale 14, 24 durch die Steuereinrichtung 120 bestimmt. So bestimmt der Empfang der Triggersignale 14 der Triggereinheit 10 den jeweiligen Beginn der Zeitintervalle und der Empfang der weiteren Triggersignale 24 der weiteren Triggereinheit 20 bestimmt das jeweilige Ende der Zeitintervalle.

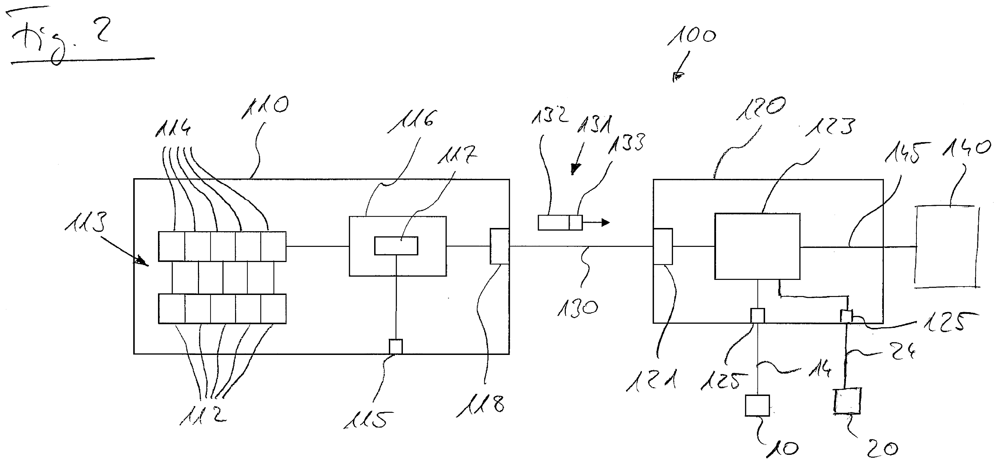

Fig. 2 zeigt eine Detailansicht des Kamerasystems 100 mit der ereignisbasierten Kamera 110 und der Steuereinrichtung 120 in einer Version ohne den Auswertespeicher 124. Die ereignisbasierte Kamera 110 weist die Verarbeitungseinheit 116 auf, die über eine Datenleitung mit dem Bildsensor 113 verbunden ist und die Ereignissignale von dem Bildsensor 113 empfängt. Die Verarbeitungseinheit 116 erzeugt die Ereignisdaten 132 basierend auf den Ereignissignalen und fügt insbesondere Zeitstempel in die Ereignisdaten 132 ein. Hierzu verfügt die Verarbeitungseinheit 116 über ein Zeitstempelmodul 117. Die Ereignisdaten 132 werden auf der Datenverbindung 130 als Datenpakete 131 übertragen, wobei die Datenpakete 131 die Ereignisdaten 132 als Nutzdaten und zusätzlich Steuerdaten 133 zur Steuerung der Datenübertragung umfassen.

Die ereignisbasierte Kamera 110 ist über ein Schnittstellenmodul 118 an die Datenverbindung 130 angebunden. Das Schnittstellenmodul 118 implementiert das für die Datenübertragung auf der Datenverbindung 130 verwendete Datenübertragungsprotokoll und erzeugt die Datenpakete 131. Die Steuereinrichtung 120 verfügt ebenfalls über ein Schnittstellenmodul 121, mit dem es an die Datenverbindung 130 angebunden ist und über das es die Datenpakete 131 mit den Ereignisdaten 132 empfängt. Das Schnittstellenmodul 121 entnimmt die Ereignisdaten 132 den Datenpaketen 131 und leitet die Ereignisdaten 132, ohne diese auszulesen oder auszuwerten, an eine Recheneinheit 123 der Steuereinrichtung 120 weiter.

Die Recheneinheit 123 ist dazu ausgebildet, die Ereignisdaten 132 von dem Schnittstellenmodul 121 zu empfangen und ist hierzu mit dem Schnittstellenmodul 121 über eine Datenleitung verbunden. Die Recheneinheit 123 ist zudem über Triggereingänge 125 mit den Triggereinheiten 10, 20 verbunden und empfängt über die Triggereingänge 125 die Triggersignale 14, 24. Wie dargestellt, kann die Recheneinheit 123 über zwei separate Triggereingänge 125 jeweils getrennt an die Triggereinheiten 10, 20 angebunden sein. Bei anderen Ausführungsformen können auch beide Triggereinheiten 10, 20 über einen einzelnen Triggereingang 125 an die Steuereinrichtung 120 angebunden sein.

Die Recheneinheit 123 ist dazu eingerichtet, beispielsweise durch in der Recheneinheit 123 hinterlegte Programmbefehle, die von dem Schnittstellenmodul 121 bereitgestellten Ereignisdaten 132 zu verwerfen, bis das Triggersignal 14 von der Triggereinheit 10 empfangen wird. Mit Empfang des Triggersignals 14 beginnt die Recheneinheit 123 die Ereignisdaten 132 dem Auswertemodul 140 über die Auswertedatenverbindung 145 zur Auswertung bereitzustellen. Mit Empfang des weiteren Triggersignals 24 beendet die Recheneinheit 123 das Bereitstellen der Ereignisdaten 132. Die Recheneinheit 123 ist dazu ausgebildet, die Ereignisdaten 132 über die Auswertedatenverbindung 145 weiterzuleiten, ohne vorher einen Informationsinhalt der Ereignisdaten 132 ausgewertet zu haben.

Bei einer Ausgestaltung kann das Schnittstellenmodul 121 die empfangenen Ereignisdaten 132 in einem Pufferspeicher bereitstellen und die Recheneinheit 123 kann dazu ausgebildet sein, die Ereignisdaten 132 erst nach Empfang des Triggersignals 14 aus dem Pufferspeicher auszulesen und das Auslesen nach Empfang des weiteren Triggersignals 24 wieder zu beenden. Bei einer alternativen Ausgestaltung können die Ereignisdaten 132 kontinuierlich von dem Schnittstellenmodul 121 an die Recheneinheit 123 übertragen werden und die Recheneinheit 123 kann die Ereignisdaten 132 erst nach Empfang des Triggersignals 14 annehmen und weiterleiten bzw. weiterverarbeiten und nach Empfang des weiteren Triggersignals 24 die Annahme und das Weiterleiten bzw. Weiterverarbeiten der Ereignisdaten 132 beenden. Alternativ kann die Recheneinheit 123 auch an einer anderen Schnittstelle, beispielsweise an einer internen Schnittstelle der Recheneinheit 123, die Ereignisdaten 132 erst nach Empfang des Triggersignals 14 annehmen und die Annahme der Ereignisdaten 132 nach Empfang des weiteren Triggersignals 24 beenden.

Wie in Fig. 2 ebenfalls dargestellt ist, weist die ereignisbasierte Kamera 110 einen Triggereingang 115 auf, welcher mit der Verarbeitungseinheit 116 verbunden ist und ein ankommendes Triggersignal an die Verarbeitungseinheit 116 weiterleitet. Beispielhaft ist der Triggereingang 115 mit dem Zeitstempelmodul 117 verbunden und das Zeitstempelmodul 117 ist dazu ausgebildet, basierend auf einem Triggersignal, welches es von dem Triggereingang 115 empfängt, Triggerereignisdaten zu erstellen und in den Ereignisdatenstrom einzufügen. Die Triggerereignisdaten können eine Zeitinformation umfassen, welche angibt, wann das Triggersignal von der Verarbeitungseinheit 116, etwa dem Zeitstempelmodul 117, empfangen wurde. In der dargestellten Ausführungsform wird der Triggereingang 115 nicht verwendet.

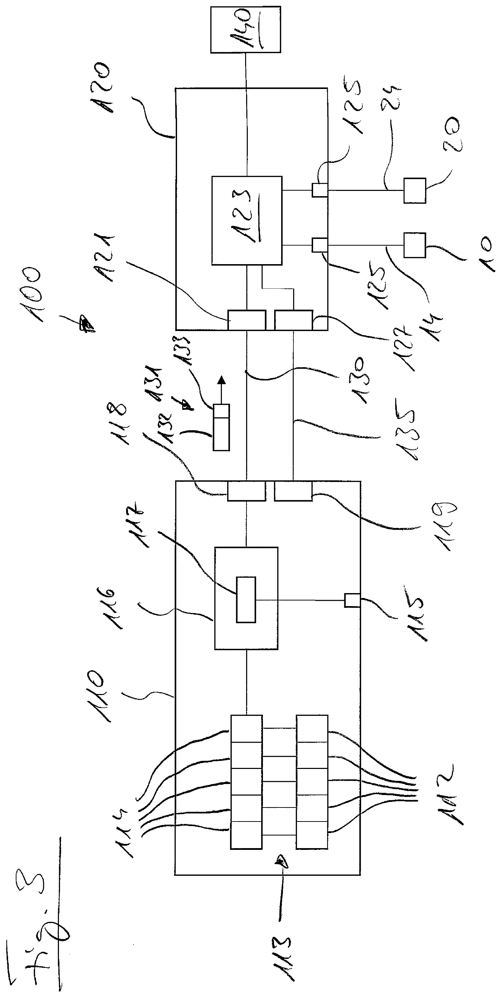

Fig. 3 zeigt eine zweite Ausführungsform des Kamerasystems 100, bei dem die Steuereinrichtung 120 eine Übertragung der Ereignisdaten 132 des Ereignisdatenstroms über die Datenverbindung 130 steuert und auf die Zeitintervalle begrenzt. Hierzu ist die Steuereinrichtung 120 über eine Steuerleitung 135 mit der ereignisbasierten Kamera 110 verbunden, wobei die Steuereinrichtung 120 über einen Steuerausgang 127 an die Steuerleitung 135 angebunden ist und die ereignisbasierte Kamera 110 über einen Steuereingang 119. Bei alternativen Ausführungsformen kann die Steuerleitung 135 auch durch die Datenverbindung 130 gebildet werden.

Die Steuereinrichtung 120 empfängt die Triggersignale 14, 24 von den Triggereinheiten 10, 20 und überträgt bei Empfang des Triggersignals 14 ein Steuersignal über die Steuerleitung 135, welches die ereignisbasierte Kamera 110 veranlasst, eine Übertragung des Ereignisdatenstroms mit den Ereignisdaten 132 über die Datenverbindung 130 zu aktivieren. Beispielsweise kann das Steuersignal die ereignisbasierte Kamera 110 in Betrieb setzen und/oder initialisieren. Ferner überträgt die Steuereinrichtung 120 bei Empfang des weiteren Triggersignals 24 ein Steuersignal über die Steuerleitung 135, welches die ereignisbasierte Kamera 110 veranlasst, die Übertragung des Ereignisdatenstroms über die Datenverbindung 130 zu deaktivieren. Beispielsweise kann das Steuersignal die ereignisbasierte Kamera 110 außer Betrieb setzen.

Bei einer alternativen Ausführungsform können auch die Triggersignale 14, 24 direkt an die ereignisbasierte Kamera 110 übertragen werden, beispielsweise können die Triggersignale 14, 24 von der Steuereinrichtung 135 empfangen und an die ereignisbasierte Kamera 110 durchgeschleift werden oder die Triggersignale 14, 24 können direkt von der ereignisbasierten Kamera 110 empfangen werden.

Die ereignisbasierte Kamera 110 kann dazu ausgebildet sein, sich nach Empfang des Triggersignals 14 in Betrieb zu setzen oder zu initialisieren. Alternativ kann die ereignisbasierte Kamera 110 dauerhaft in Betrieb sein und dazu ausgebildet sein, mit der Übertragung des Ereignisdatenstroms nach Empfang des Triggersignals 14 zu beginnen. Ferner kann die ereignisbasierte Kamera 110 dazu ausgebildet sein, nach Empfang des weiteren Triggersignals 24 den Betrieb zu beenden. Alternativ kann die ereignisbasierte Kamera 110 dauerhaft in Betrieb sein und dazu ausgebildet sein, die Übertragung des Ereignisdatenstroms nach Empfang des weiteren Triggersignals 24 zu beenden.

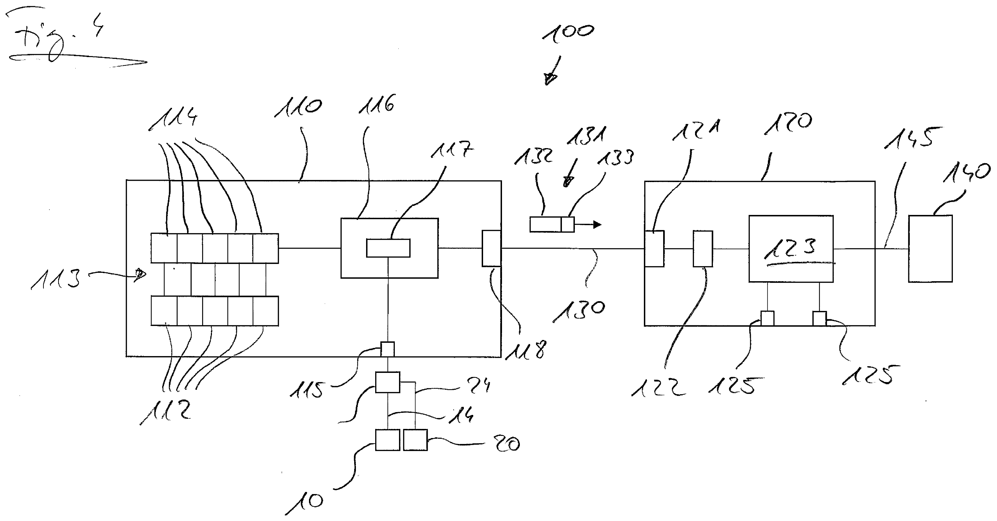

Fig. 4 zeigt eine dritte Ausführungsform des Kamerasystems 100, bei der die Triggereinheiten 10, 20 an den Triggereingang 115 der ereignisbasierten Kamera 110 angeschlossen sind. Dabei werden die Triggersignale 14, 24 beispielhaft gemeinsam dem Triggereingang 115 zugeführt. Alternativ könnte die ereignisbasierte Kamera 110 auch zwei separate Triggereingänge 115 aufweisen und jede der Triggereinheiten 10, 20 könnte an einen eigenen Triggereingang 115 angeschlossen sein.

Die Verarbeitungseinheit 116 der ereignisbasierten Kamera 110 empfängt die Triggersignale 14, 24 und fügt entsprechende Triggerereignisdaten in den Ereignisdatenstrom ein. Die Triggerereignisdaten stellen ebenfalls Ereignisdaten 132 dar. Insbesondere werden Triggerereignisdaten auch als Ereignisdaten 132 über die Datenverbindung 130 übertragen.

In der Steuereinrichtung 120 werden die Ereignisdaten 132 des Ereignisdatenstroms in einem Pufferspeicher 122 zwischengespeichert. Die Recheneinheit 123 ist dazu ausgebildet, die Ereignisdaten 132 aus dem Pufferspeicher 122 auszulesen und dahingehend auszuwerten, ob sie Triggerereignisdaten umfassen. Liest die Recheneinheit 123 Triggerereignisdaten aus, die auf Basis des Triggersignals 14 der Triggereinheit 10 erzeugt wurden, stellt sie alle nachfolgenden Ereignisdaten aus dem Pufferspeicher 122 zur Auswertung dem Auswertemodul 140 zur Verfügung. Liest die Recheneinheit 123 Triggerereignisdaten aus, die auf Basis des weiteren Triggersignals 24 der weiteren Triggereinheit 20 erzeugt wurden, beendet die Recheneinheit 123 das Bereitstellen der Ereignisdaten 132 aus dem Pufferspeicher 122.

Die Recheneinheit 120 und/oder das Auswertemodul 140 können zumindest teilweise verteilt ausgebildet sein, beispielsweise in einer übergeordneten Steuerung, einem Netzwerk, einem Edge-Device oder einer Cloud.

### Bezugszeichenliste

- 1: Objekterfassungssystem
- 5: Objekt
- 6: Bewegung
- 7: Kontraststelle
- 8: Vorderkante
- 9: Hinterkante
- 10: Triggereinheit
- 12: Triggerposition
- 14: Triggersignal
- 20: weitere Triggereinheit
- 22: weitere Triggerposition
- 24: weiteres Triggersignal
- 30: Fördereinrichtung
- 100: Kamerasystem
- 110: ereignisbasierte Kamera
- 111: Erfassungsbereich
- 112: Pixelelement
- 113: Bildsensor
- 114: Auswerteschaltung
- 115: Triggereingang
- 116: Verarbeitungseinheit
- 117: Zeitstempelmodul
- 118: Schnittstellenmodul
- 119: Steuereingang
- 120: Steuereinrichtung
- 121: Schnittstellenmodul
- 122: Pufferspeicher
- 123: Recheneinheit
- 124: Auswertespeicher
- 125: Triggereingang
- 127: Steuerausgang
- 130: Datenverbindung
- 131: Datenpaket
- 132: Ereignisdaten
- 133: Steuerdaten
- 135: Steuerleitung
- 140: Auswertemodul
- 145: Auswertedatenverbindung

## Patentansprüche

1. Objekterfassungssystem (1) zur Aufnahme eines sich in einer Bewegung (6) befindlichen Objekts (5),
umfassend eine Triggereinheit (10) und ein Kamerasystem (100),
wobei das Kamerasystem (100) eine ereignisbasierte Kamera (110) und eine Steuereinrichtung (120) umfasst,
wobei die ereignisbasierte Kamera (110) dazu ausgebildet ist, das Objekt (5) in einem Erfassungsbereich (111) der Kamera (110) zu erfassen und auf zumindest ein Pixelelement (112) der Kamera (110) abzubilden, wobei die ereignisbasierte Kamera (110) eine Verarbeitungseinheit (116) aufweist, die dazu ausgebildet ist, ereignisbasiert bei einem Erfassen einer Belichtungsänderung des Pixelelements (112) die Belichtungsänderung anzeigende Ereignisdaten (132) zu erzeugen und die Ereignisdaten (132) in einem Ereignisdatenstrom über eine Datenverbindung (130) auszugeben, wobei die Triggereinheit (10) dazu ausgebildet ist, eine Anwesenheit des Objekts (5) an einer Triggerposition (12) zu erfassen und ein Triggersignal (14) an das Kamerasystem (100) zu senden,
wobei das Triggersignal (14) die Anwesenheit des Objekts (5) an der Triggerposition (12) anzeigt,
wobei das Kamerasystem (100) dazu ausgebildet ist, die Ereignisdaten (132) lediglich innerhalb von Zeitintervallen für eine Auswertung bereitzustellen,
wobei eine Grenze der Zeitintervalle durch einen Zeitpunkt eines Empfangs des Triggersignals (14) bestimmt ist.

2. Objekterfassungssystem (1) nach Anspruch 1,
wobei das Kamerasystem (100) dazu ausgebildet ist, die Ereignisdaten (132) des Ereignisdatenstroms lediglich innerhalb der Zeitintervalle für die Auswertung bereitzustellen, ohne einen Informationsinhalt der Ereignisdaten (132) auszuwerten

3. Objekterfassungssystem (1) nach einem der vorhergehenden Ansprüche, umfassend eine weitere Triggereinheit (20),
wobei die weitere Triggereinheit (20) dazu ausgebildet ist, eine Anwesenheit des Objekts (5) an einer weiteren Triggerposition (22) zu erfassen und ein weiteres Triggersignal (24) an das Kamerasystem (100) zu senden, wobei eine weitere Grenze der Zeitintervalle durch einen Zeitpunkt eines Empfangs des weiteren Triggersignals (24) bestimmt ist.

4. Objekterfassungssystem (1) nach einem der vorhergehenden Ansprüche, wobei die Steuereinrichtung (120) dazu ausgebildet ist, das Triggersignal (14) zu empfangen und ein Ausgeben der Ereignisdaten (132) auf die Zeitintervalle zu beschränken.

5. Objekterfassungssystem (1) nach einem der vorhergehenden Ansprüche, wobei die ereignisbasierte Kamera (110) dazu ausgebildet ist, den Ereignisdatenstrom kontinuierlich an die Steuereinrichtung (120) zu übertragen, wobei die Steuereinrichtung (120) dazu ausgebildet ist, die Ereignisdaten (132) des Ereignisdatenstroms (132) außerhalb der Zeitintervalle zu verwerfen.

6. Objekterfassungssystem (1) nach Anspruch 5,
wobei die Steuereinrichtung (120) dazu ausgebildet ist, die Ereignisdaten (132) außerhalb der Zeitintervalle direkt zu verwerfen und die Ereignisdaten (132) innerhalb der Zeitintervalle für die Auswertung bereitzustellen.

7. Objekterfassungssystem (1) nach Anspruch 5,
wobei die Steuereinrichtung (120) einen Pufferspeicher (122) aufweist, wobei die Steuereinrichtung (120) dazu ausgebildet ist, alle Ereignisdaten (132) des Ereignisdatenstroms in den Pufferspeicher (122) zu schreiben, wobei die Steuereinrichtung (120) dazu ausgebildet ist, die Ereignisdaten (132) selektiv innerhalb der Zeitintervalle aus dem Pufferspeicher (122) auszulesen und zur Auswertung bereitzustellen und die Ereignisdaten (132) außerhalb der Zeitintervalle zu verwerfen, indem die Ereignisdaten (132) außerhalb der Zeitintervalle im Pufferspeicher (122) belassen und überschrieben werden.

8. Objekterfassungssystem (1) nach Anspruch 7,
wobei die ereignisbasierte Kamera (110) zu einem Empfangen des Triggersignals (14) ausgebildet ist und dazu ausgebildet ist, das Empfangen des Triggersignals (14) anzeigende Triggerereignisdaten in den Ereignisdatenstrom einzufügen,
wobei die Steuereinrichtung (120) dazu ausgebildet ist, basierend auf den Triggerereignisdaten die Ereignisdaten (132) innerhalb der Zeitintervalle aus dem Pufferspeicher (122) auszulesen und zur Auswertung bereitzustellen.

9. Objekterfassungssystem (1) nach einem der Ansprüche 1 und 3,
wobei das Kamerasystem (100) dazu ausgebildet ist, eine Übertragung des Ereignisdatenstroms (132) von der ereignisbasierten Kamera (110) an die Steuereinrichtung (120) basierend auf dem Triggersignal (14) auf die Zeitintervalle zu begrenzen.

10. Objekterfassungssystem (1) nach Anspruch 9,
wobei die ereignisbasierte Kamera (110) dazu ausgebildet ist, das Triggersignal (14) zu empfangen und die Übertragung des Ereignisdatenstroms (132) basierend auf dem Triggersignal (14) auf die Zeitintervalle zu begrenzen, beispielsweise die Übertragung des Ereignisdatenstroms (132) basierend auf dem Triggersignal (14) zu beginnen oder zu beenden,
wobei die ereignisbasierte Kamera (110) beispielsweise dazu ausgebildet ist, bei Empfang des Triggersignals (14) in Betrieb oder außer Betrieb zu gehen.

11. Objekterfassungssystem (1) nach Anspruch 9,
wobei die Steuereinrichtung (120) dazu ausgebildet ist, das Triggersignal (14) zu empfangen und basierend auf dem Triggersignal (14) die ereignisbasierte Kamera (110) in Betrieb oder außer Betrieb zu setzen.

12. Objekterfassungssystem (1) nach einem der vorhergehenden Ansprüche,
wobei das Kamerasystem (100) dazu ausgebildet ist, die Ereignisdaten (132) innerhalb der Zeitintervalle für die Auswertung bereitzustellen, indem die Ereignisdaten (132) in einem Auswertespeicher (124) zur weiteren Verarbeitung durch ein Auswertemodul (140) gespeichert werden oder direkt an das Auswertemodul (140) weitergeleitet werden und/oder
wobei die Triggerposition (12) innerhalb des Erfassungsbereichs (111) der ereignisbasierten Kamera (110) angeordnet ist, beispielsweise auf einer Grenze des Erfassungsbereichs (111), und/oder
wobei die ereignisbasierte Kamera (110) dazu ausgebildet ist, das Objekt (5) in der Bewegung (6) in dem Erfassungsbereich (111) der ereignisbasierten Kamera (110) zu erfassen und Bereiche des Objekts (5) sukzessive auf verschiedene Pixelelemente (112) der ereignisbasierten Kamera (110) abzubilden.

13. Objekterfassungssystem (1) nach einem der vorhergehenden Ansprüche, wobei das Objekterfassungssystem (1) ein Auswertemodul (140) zur Auswertung der Ereignisdaten (132) umfasst,
wobei das Auswertemodul (140) dazu ausgebildet ist, bei der Auswertung der Ereignisdaten (132) eine Objektinformation zu erstellen,
wobei in der Objektinformation mehrere Ereignisdaten (132) aus den Zeitintervallen verrechnet sind,
wobei beispielsweise das Auswertemodul (140) dazu ausgebildet ist, die mehreren Ereignisdaten (132) bei dem Erstellen der Objektinformation entsprechend einer seit einem Bezugszeitpunkt verstrichenen Zeit und einer während der verstrichenen Zeit erfolgten Bewegung (6) des Objekts (5) korrigiert zu verrechnen.

14. Objekterfassungssystem (1) nach einem der vorhergehenden Ansprüche,
wobei das Kamerasystem (100) dazu eingerichtet ist, stationär an einer Fördereinrichtung (30), mittels derer das Objekt (5) durch den Erfassungsbereich (111) der ereignisbasierten Kamera (110) bewegbar ist, angeordnet zu werden und/oder
wobei die Bewegung (6) eine lineare Bewegung ist.

15. Objekterfassungssystem (1) nach einem der vorhergehenden Ansprüche, wobei das Objekt (5) eine homogene Fläche und auf der homogenen Fläche angeordnete Kontraststellen (7), beispielsweise Störstellen oder Markierungen, aufweist,
wobei beispielsweise das Triggersignal (14) eine Anwesenheit einer Kante (8) der homogenen Fläche an der Triggerposition (12) anzeigt,
wobei das Objekt (5) beispielsweise eine Batteriefolie und die Kontraststellen (7) in die Batteriefolie eingelagerte Störstellen sind oder
die Kontraststellen (7) beispielsweise eine maschinenlesbare Markierung, etwa ein Barcode oder in QR-Code, sind.
